# EUROPEAN PATENT APPLICATION

(11) **EP 4 293 519 A1**
(43) Date of publication of application: **20.12.2023**
(21) Application number: 22179673.3
(22) Date of filing: 17.06.2022
(51) Int. Cl.: G06F 11/36

(54) **MACHINE LEARNING MODEL TESTING**

(71) Applicant: Nokia Solutions and Networks Oy, 02610 Espoo (FI)
(72) Inventor: MWANJE, Stephen, 84405 Dorfen (DE); ABDELKADER, Abdelrahman, 80333 Munich (DE)
(74) Representative: TBK

(57) **Abstract**

There are provided measures for machine learning model testing. Such measures exemplarily comprise receiving information in relation to a machine learning model testing operation to be performed with respect to a machine learning model, creating a machine learning model testing job representing said machine learning model testing operation, and transmitting information indicative of acknowledgement of said machine learning model testing operation.

## Description

### Field

Various example embodiments relate to machine learning model testing. More specifically, various example embodiments exemplarily relate to measures (including methods, apparatuses and computer program products) for realizing machine learning model testing.

### Background

The present specification generally relates to machine learning (ML) and artificial intelligence (AI) in cognitive autonomous networks (CAN).

CANs promise to provide intelligence and autonomy in network operations, administration and management (OAM) as well as in the network procedures to support the increased flexibility and complexity of the radio network.

Through use of ML and AI in cognitive functions (CF), CAN is expected to be able to
- take higher level goals and derive the appropriate performance targets,
- learn from their environment and their individual or shared experiences therein,
- learn to contextualize their operating conditions, and
- learn their optimal behavior fitting to the specific environment and contexts.

One use case for such cognitive automation is handover optimization.

To achieve the desired outcomes, any machine learning model ("MLModel") or any function containing an MLModel needs to be tested with the appropriate network data, preferably within the network where the MLModel is expected to be deployed. Correspondingly, the network or its management system needs to have the required management services to test the MLModels or the functions containing MLModels.

An MLModel may be an independent managed entity, in which case the process of checking the validity of the model itself may be termed as MLModel testing. Alternatively, the MLModel may be an entity that is not independently managed but as an attribute of a managed ML-based function or application ("MLApp"), in which case testing may imply implementing the necessary means to enable the MLApp to test the model inside it.

The two processes are correspondingly be referred to herein as MLModel testing and ML testing, respectively.

By implication, MLModel testing is a subset of ML testing, since the MLApp for which ML testing is enabled undertakes MLModel testing as an internal activity.

After an ML model is trained, validation is done to ensure the training process is completed successfully.

Typically, validation is done by preserving part of the training data set and using it after training to check whether the ML model has been trained correctly or not.

However, even after the model is validated during ML model development, testing is necessary to check if the ML model is working correctly under certain runtime context or using certain testing data set.

In principle, the two operations (validation, test) are similar on a functional level, where both of them check the ML model performance against given context or data to ensure the ML model is functioning correctly. However, testing involves interaction with third parties, e.g. the operators that shall use the model, or third-party systems that may rely on the results computed by the model.

For these reasons, testing needs to be standardized to enable the multi-vendor interaction among the different systems.

Any ML Model needs to be tested with specific inputs and features that are applicable to the use case and the applicable deployment environment. The network or its management system needs have the capabilities and provide the services needed to enable the consumer to request testing and receive feedback on the testing of a specific ML model or of an application or function that contains an ML model.

Moreover, the testing is not necessarily undertaken by humans, so the interactions need to be machine implementable in an automated way.

Hence, the problem arises that means and capabilities for efficient testing of ML models or functions containing ML models in networks, in particular in multi-vendor scenarios, are needed.

Hence, there is a need to provide for machine learning model testing.

### Summary

Various example embodiments aim at addressing at least part of the above issues and/or problems and drawbacks.

Various aspects of example embodiments are set out in the appended claims.

According to an exemplary aspect, there is provided a method comprising receiving information in relation to a machine learning model testing operation to be performed with respect to a machine learning model, creating a machine learning model testing job representing said machine learning model testing operation, and transmitting information indicative of acknowledgement of said machine learning model testing operation.

According to an exemplary aspect, there is provided a method comprising transmitting information in relation to a machine learning model testing operation to be performed with respect to a machine learning model, and receiving information indicative of acknowledgement of said machine learning model testing operation.

According to an exemplary aspect, there is provided an apparatus comprising receiving circuitry configured to receive information in relation to a machine learning model testing operation to be performed with respect to a machine learning model, creating circuitry configured to create a machine learning model testing job representing said machine learning model testing operation, and transmitting circuitry configured to transmit information indicative of acknowledgement of said machine learning model testing operation.

According to an exemplary aspect, there is provided an apparatus comprising transmitting circuitry configured to transmit information in relation to a machine learning model testing operation to be performed with respect to a machine learning model, and receiving circuitry configured to receive information indicative of acknowledgement of said machine learning model testing operation.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform receiving information in relation to a machine learning model testing operation to be performed with respect to a machine learning model, creating a machine learning model testing job representing said machine learning model testing operation, and transmitting information indicative of acknowledgement of said machine learning model testing operation.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform transmitting information in relation to a machine learning model testing operation to be performed with respect to a machine learning model, and receiving information indicative of acknowledgement of said machine learning model testing operation.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient provision, management, and control of testing capabilities of ML models or functions containing ML models and corresponding interfaces to thereby solve at least part of the problems and drawbacks identified in relation to the prior art.

By way of example embodiments, there is provided machine learning model testing. More specifically, by way of example embodiments, there are provided measures and mechanisms for realizing machine learning model testing.

Thus, improvement is achieved by methods, apparatuses and computer program products enabling/realizing machine learning model testing.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a schematic diagram of a procedure according to example embodiments,
Figure 5 is a schematic diagram of a procedure according to example embodiments,
Figure 6 shows a schematic diagram of an example of a system environment with signaling variants according to example embodiments,
Figure 7 shows a schematic diagram illustrating relationships between units involved in ML model testing according to example embodiments,
Figure 8 shows a schematic diagram illustrating relationships between units involved in ML model testing according to example embodiments,
Figure 9 shows a schematic diagram illustrating relationships between units involved in ML model testing according to example embodiments,
Figure 10 is a schematic diagram of a procedure according to example embodiments,
Figure 11 shows a schematic diagram of signaling sequences according to example embodiments,
Figure 12 shows a schematic diagram of signaling sequences according to example embodiments,
Figure 13 shows a schematic diagram of signaling sequences according to example embodiments,
Figure 14 shows a schematic diagram of signaling sequences according to example embodiments,
Figure 15 shows a schematic diagram of signaling sequences according to example embodiments,
Figure 16 shows a schematic diagram of signaling sequences according to example embodiments,
Figure 17 shows a schematic diagram of signaling sequences according to example embodiments,
Figure 18 shows a schematic diagram of signaling sequences according to example embodiments,
Figure 19 shows a schematic diagram of signaling sequences according to example embodiments, and
Figure 20 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) machine learning model testing, and in particular means, capabilities and processes for testing of ML models and ML-model based functions (containing ML models), for control and management thereof, as well as for communication in relation thereto.

In brief, according to example embodiments, an ML testing function or process ("MLTesting") and the related services needed to realize the ML testing function or process are provided.

Further, in brief, according to example embodiments, functionality and related services needed to manage and control the ML testing process and the related requests associated with a specific ML Model ("MLModel") are provided.

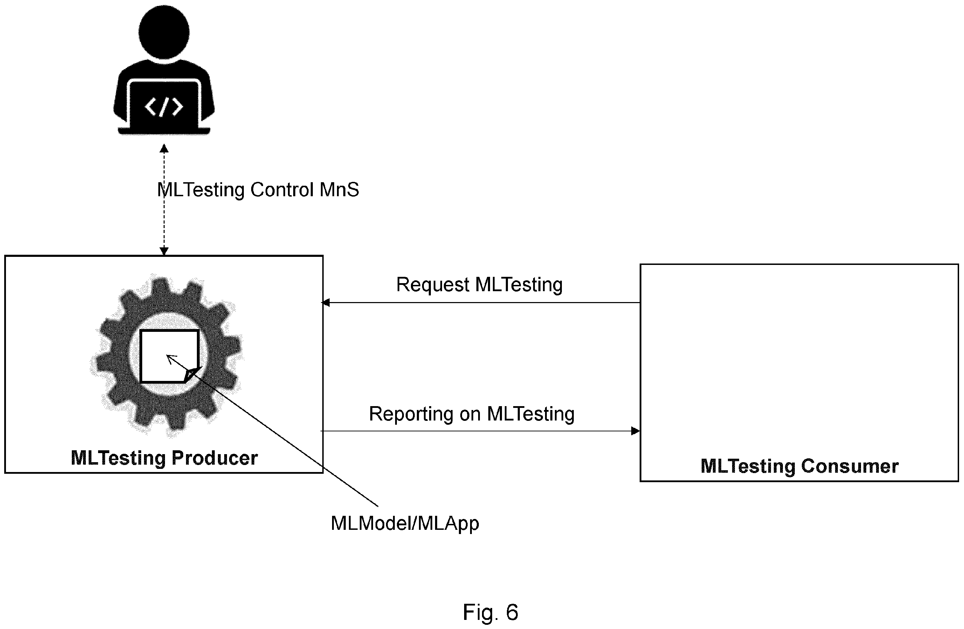

Figure 6 shows a schematic diagram of an example of a system environment with signaling variants according to example embodiments, and in particular illustrates management and control of the ML testing process according to example embodiments.

As one aspect, according to example embodiments, an authorized consumer is enabled to request the testing of a specific MLModel or MLApp(function).

Accordingly, the MLTesting receives a request to test an MLModel or MLApp(function), hereinafter referred to as "MLTestingRequest", and subsequently instantiates a testing process (hereinafter referred to as "MLTestingJob") associated with the received MLTestingRequest and the specified MLModel or MLApp(function).

According to example embodiments, the request for MLTesting may be stated without specifying the applicable data for testing. Alternatively, the consumer may provide the data or indication of the specific data to be used for testing.

As another aspect, according to example embodiments, an authorized consumer is enabled to create an instance of the ML testing process (the MLTestingJob). Accordingly, the MLTesting receives a request to instantiate an MLTestingJob for an MLModel or MLApp(function).

As another aspect, according to example embodiments, a function is provided to test a specific MLModel or MLApp(function) using existing data, specified data, or data with specifically stated characteristic.

As another aspect, according to example embodiments, a function is provided to test a specific MLModel or MLApp(function) using a specified expected RuntimeContext.

As another aspect, according to example embodiments, an authorized consumer is enabled to request reporting, and the MLTesting is enabled to report, on a specific MLTestingRequest, on a specific MLTestingJob or on the outcomes of any such MLTestingRequest or MLTestingJob.

As another aspect, according to example embodiments, an authorized consumer (e.g. the function/entity that generated the MLTestingRequest) is enabled to define the reporting characteristics related to a specific MLTestingJob.

As another aspect, according to example embodiments, an authorized consumer (e.g. an operator or the function/entity that generated the MLTestingRequest) is enabled to manage the request (e.g. to suspend, re-activate or cancel the MLTestingRequest) or to adjust the desired characteristics of the desired testing.

As another aspect, according to example embodiments, an authorized consumer (e.g. an operator) is enabled to manage or control a specific MLTestingJob (e.g. to start, suspend or restart the testing) or to adjust the testing conditions or characteristics.

Thus, according to example embodiments, the MLTesting is modelled as a managed function that is contained in either any network-related ManagedFunction, ManagementFunction, or subnetwork. The MLTesting then contains or is associated with the critical properties and modules needed to accomplish MLTesting, including:
- the list of MLTestingRequests,
- the list of MLModels either under testing or to be considered for testing,
- the list of MLTestingJobs, as well as
- the list of reporting instances on any of MLTesting requests, MLTestingJobs, or their related outcomes.

Further, according to example embodiments, the MLTesting has the capability and interfaces to instantiate (and as such instantiates) an MLTestingJob based on requests and instructions from managed functions, from management functions or from human operators. Correspondingly, the MLTesting has the capabilities to test (and as such tests) an MLModel or MLApp(function) using specified data, data with specific characteristics, or specific expectedRuntimeContext.

Further, according to example embodiments, the MLTesting has the capabilities and control interfaces to allow (and as such allows) an operator or a management function to configure and manage one or more MLTestingRequests, and one or more MLTestingJobs.

Still further, according to example embodiments, the MLModelTesting process within the MLTesting is a pipeline of processes that include getting the data fitted to the use case and model, pre-processing the data e.g. to format it according to the input required for the model, designing or selecting the execution plan e.g. by batching the data for the executions, evaluating the performing on the individual execution, and finally compiling performance statistics for the testing reporting.

Example embodiments are specified below in more detail.

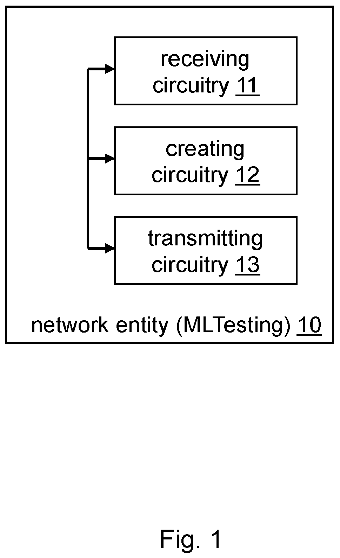

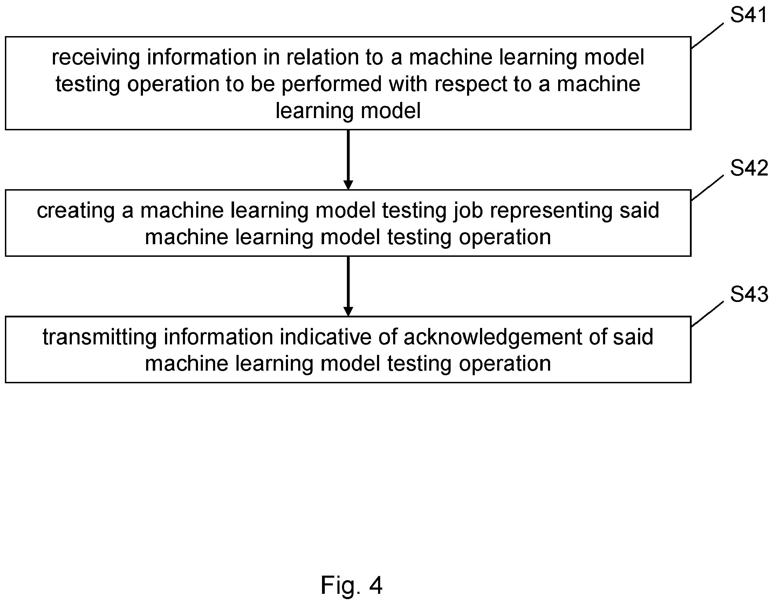

Figure 1 is a block diagram illustrating an apparatus according to example embodiments. The apparatus may be a network node or entity 10 such as a MLTesting entity (or an apparatus hosting or supporting such functionality) comprising a receiving circuitry 11, a creating circuitry 12, and a transmitting circuitry 13. According to example embodiments, the receiving circuitry 11, the creating circuitry 12, and/or the transmitting circuitry 13 may be embodied by a common/combined circuitry or may be embodied by separate circuitries, and combinations thereof. The receiving circuitry 11 receives information in relation to a machine learning model testing operation to be performed with respect to a machine learning model. The creating circuitry 12 creates a machine learning model testing job representing said machine learning model testing operation. The transmitting circuitry 13 transmits information indicative of acknowledgement of said machine learning model testing operation. Figure 4 is a schematic diagram of a procedure according to example embodiments. The apparatus according to Figure 1 may perform the method of Figure 4 but is not limited to this method. The method of Figure 4 may be performed by the apparatus of Figure 1 but is not limited to being performed by this apparatus.

As shown in Figure 4, a procedure according to example embodiments comprises an operation of receiving (S41) information in relation to a machine learning model testing operation to be performed with respect to a machine learning model, an operation of creating (S42) a machine learning model testing job representing said machine learning model testing operation, and an operation of transmitting (S43) information indicative of acknowledgement of said machine learning model testing operation.

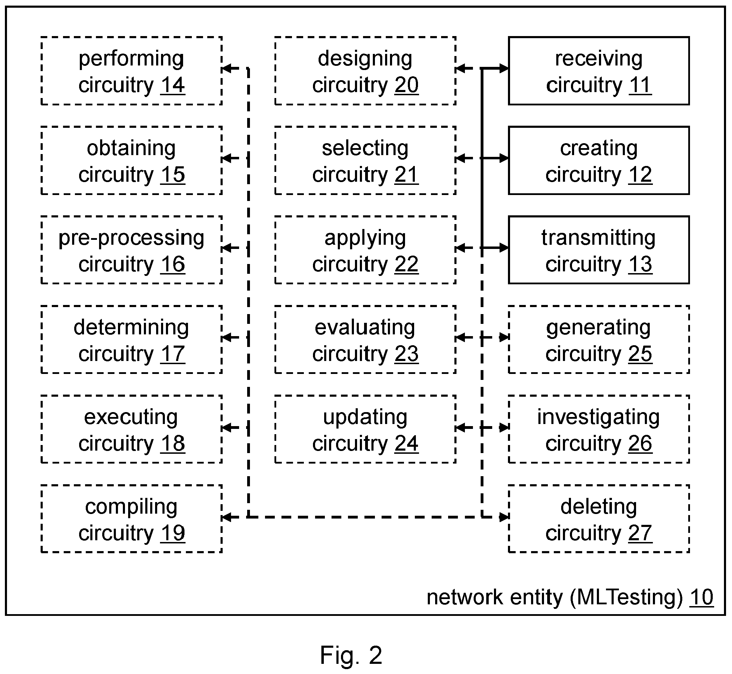

Figure 2 is a block diagram illustrating an apparatus according to example embodiments. In particular, Figure 2 illustrates a variation of the apparatus shown in Figure 1. The apparatus according to Figure 2 may thus further comprise performing circuitry 14, obtaining circuitry 15, pre-processing circuitry 16, determining circuitry 17, executing circuitry 18, compiling circuitry 19, designing circuitry 20, selecting circuitry 21, applying circuitry 22, evaluating circuitry 23, updating circuitry 24, generating circuitry 25, investigating circuitry 26, and/or deleting circuitry 27. According to example embodiments, the performing circuitry 14, the obtaining circuitry 15, the pre-processing circuitry 16, the determining circuitry 17, the executing circuitry 18, the compiling circuitry 19, the designing circuitry 20, the selecting circuitry 21, the applying circuitry 22, the evaluating circuitry 23, the updating circuitry 24, the generating circuitry 25, the investigating circuitry 26, and/or the deleting circuitry 27 may be embodied by a common/combined circuitry or may be embodied by separate circuitries, and combinations thereof.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 4, exemplary additional operations are given, which are inherently independent from each other as such. According to such variation, an exemplary method according to example embodiments may comprise an operation of performing said machine learning model testing job.

According to a variation of the procedure shown in Figure 4, exemplary details of the performing operation are given, which are inherently independent from each other as such. Such exemplary performing operation according to example embodiments may comprise an operation of obtaining data fitted for testing said machine learning model, an operation of pre-processing said data, an operation of determining a plan for applying said machine learning model to said data, an operation of executing said plan, and an operation of compiling performance statistics based on results of said executing.

According to a variation of the procedure shown in Figure 4, exemplary details of the determining operation are given, which are inherently independent from each other as such. Such exemplary determining operation according to example embodiments may comprise an operation of designing said plan, or an operation of selecting said plan from a plurality of predetermined plans, and/or

Alternatively, or in addition, according to a variation of the procedure shown in Figure 4, exemplary details of the executing operation are given, which are inherently independent from each other as such. Such exemplary executing operation according to example embodiments may comprise an operation of applying said machine learning model to said data, an operation of evaluating a performance of said machine learning model, and an operation of updating said machine learning model based on said evaluating.

According to further example embodiments, said information in relation to said machine learning model testing operation to be performed is a request for testing said machine learning model.

According to further example embodiments, said request includes information on said machine learning model and information on expected machine learning model operation conditions.

According to further example embodiments, said information in relation to said machine learning model testing operation to be performed is a request for said machine learning model testing job.

According to a variation of the procedure shown in Figure 4, exemplary additional operations are given, which are inherently independent from each other as such. According to such variation, an exemplary method according to example embodiments may comprise an operation of generating testing reporting content based on performance of said machine learning model testing job, and an operation of transmitting said testing reporting content.

According to a variation of the procedure shown in Figure 4, exemplary additional operations are given, which are inherently independent from each other as such. According to such variation, an exemplary method according to example embodiments may comprise an operation of receiving information in relation to a required testing reporting.

According to a variation of the procedure shown in Figure 4, exemplary additional operations are given, which are inherently independent from each other as such. According to such variation, an exemplary method according to example embodiments may comprise an operation of receiving a request with respect to an existing machine learning model testing job.

According to a variation of the procedure shown in Figure 4, exemplary additional operations are given, which are inherently independent from each other as such. According to such variation, said request with respect to said existing machine learning model testing job is a demand for information on said existing machine learning model testing job, and an exemplary method according to example embodiments may comprise an operation of investigating said information on said existing machine learning model testing job, and an operation of transmitting said information on said existing machine learning model testing job.

Alternatively, according to a variation of the procedure shown in Figure 4, exemplary additional operations are given, which are inherently independent from each other as such. According to such variation, said request with respect to said existing machine learning model testing job is a demand for reconfiguration of said existing machine learning model testing job, and an exemplary method according to example embodiments may comprise an operation of applying said reconfiguration to said existing machine learning model testing job.

Alternatively, according to a variation of the procedure shown in Figure 4, exemplary additional operations are given, which are inherently independent from each other as such. According to such variation, said request with respect to said existing machine learning model testing job is a demand for deletion of said existing machine learning model testing job, and an exemplary method according to example embodiments may comprise an operation of deleting said existing machine learning model testing job.

According to a variation of the procedure shown in Figure 4, exemplary additional operations are given, which are inherently independent from each other as such. According to such variation, an exemplary method according to example embodiments may comprise an operation of receiving a request with respect to an existing machine learning model testing request.

According to a variation of the procedure shown in Figure 4, exemplary additional operations are given, which are inherently independent from each other as such. According to such variation, said request with respect to said existing machine learning model testing request is a demand for information on said existing machine learning model testing request, and an exemplary method according to example embodiments may comprise an operation of investigating said information on said existing machine learning model testing request, and an operation of transmitting said information on said existing machine learning model testing request.

Alternatively, according to a variation of the procedure shown in Figure 4, exemplary additional operations are given, which are inherently independent from each other as such. According to such variation, said request with respect to said existing machine learning model testing request is a demand for configuration of said existing machine learning model testing request, and an exemplary method according to example embodiments may comprise an operation of applying said configuration to said existing machine learning model testing request.

Alternatively, according to a variation of the procedure shown in Figure 4, exemplary additional operations are given, which are inherently independent from each other as such. According to such variation, said request with respect to said existing machine learning model testing request is a demand for deletion of said existing machine learning model testing request, and an exemplary method according to example embodiments may comprise an operation of deleting said existing machine learning model testing request.

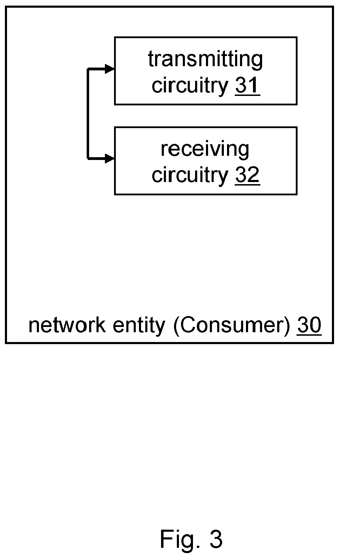

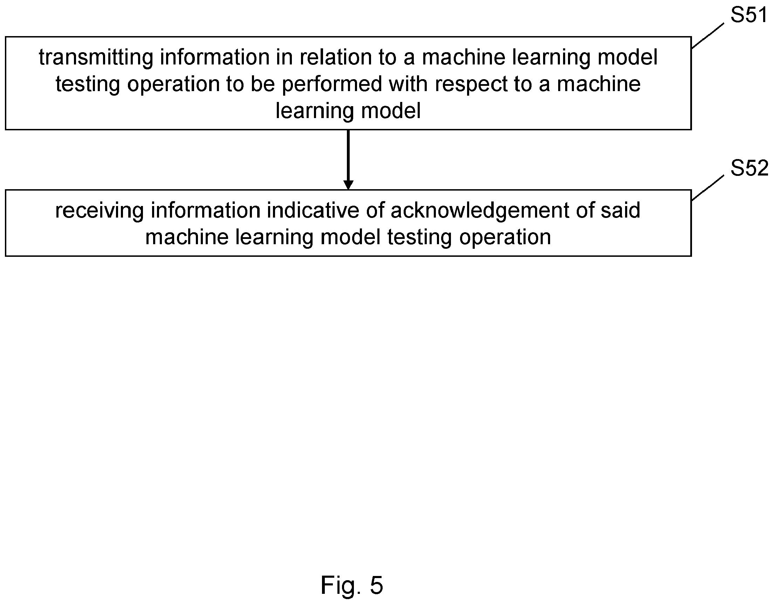

Figure 3 is a block diagram illustrating an apparatus according to example embodiments. The apparatus may be a network node or entity 30 such as a Consumer entity (or an apparatus hosting or supporting such functionality) comprising a transmitting circuitry 31 and a receiving circuitry 32. According to example embodiments, the transmitting circuitry 31 and the receiving circuitry 32 may be embodied by a common/combined circuitry or may be embodied by separate circuitries, and combinations thereof. The transmitting circuitry 31 transmits information in relation to a machine learning model testing operation to be performed with respect to a machine learning model. The receiving circuitry 32 receives information indicative of acknowledgement of said machine learning model testing operation. Figure 5 is a schematic diagram of a procedure according to example embodiments. The apparatus according to Figure 3 may perform the method of Figure 5 but is not limited to this method. The method of Figure 5 may be performed by the apparatus of Figure 3 but is not limited to being performed by this apparatus.

As shown in Figure 5, a procedure according to example embodiments comprises an operation of transmitting (S51) information in relation to a machine learning model testing operation to be performed with respect to a machine learning model, and an operation of receiving (S52) information indicative of acknowledgement of said machine learning model testing operation.

In an embodiment at least some of the functionalities of the apparatus shown in Figure 3 may be shared between two physically separate devices forming one operational entity. Therefore, the apparatus may be seen to depict the operational entity comprising one or more physically separate devices for executing at least some of the described processes.

According to further example embodiments, said information in relation to said machine learning model testing operation to be performed is a request for testing said machine learning model.

According to further example embodiments, said request includes information on said machine learning model and information on expected machine learning model operation conditions.

According to further example embodiments, said information in relation to said machine learning model testing operation to be performed is a request for a machine learning model testing job.

According to a variation of the procedure shown in Figure 5, exemplary additional operations are given, which are inherently independent from each other as such. According to such variation, an exemplary method according to example embodiments may comprise an operation of receiving testing reporting content.

According to a variation of the procedure shown in Figure 5, exemplary additional operations are given, which are inherently independent from each other as such. According to such variation, an exemplary method according to example embodiments may comprise an operation of transmitting information in relation to a required testing reporting.

According to a variation of the procedure shown in Figure 5, exemplary additional operations are given, which are inherently independent from each other as such. According to such variation, an exemplary method according to example embodiments may comprise an operation of transmitting a request with respect to an existing machine learning model testing job.

According to a variation of the procedure shown in Figure 5, exemplary additional operations are given, which are inherently independent from each other as such. According to such variation, said request with respect to said existing machine learning model testing job is a demand for information on said existing machine learning model testing job, and an exemplary method according to example embodiments may comprise an operation of receiving said information on said existing machine learning model testing job.

Alternatively, according to further example embodiments, said request with respect to said existing machine learning model testing job is a demand for reconfiguration of said existing machine learning model testing job.

Alternatively, according to further example embodiments, said request with respect to said existing machine learning model testing job is a demand for deletion of said existing machine learning model testing job.

According to a variation of the procedure shown in Figure 5, exemplary additional operations are given, which are inherently independent from each other as such. According to such variation, an exemplary method according to example embodiments may comprise an operation of transmitting a request with respect to an existing machine learning model testing request.

According to a variation of the procedure shown in Figure 5, exemplary additional operations are given, which are inherently independent from each other as such. According to such variation, said request with respect to said existing machine learning model testing request is a demand for information on said existing machine learning model testing request, and an exemplary method according to example embodiments may comprise an operation of receiving said information on said existing machine learning model testing request.

Alternatively, according to further example embodiments, said request with respect to said existing machine learning model testing request is a demand for configuration of said existing machine learning model testing request.

Alternatively, according to further example embodiments, said request with respect to said existing machine learning model testing request is a demand for deletion of said existing machine learning model testing request.

Example embodiments outlined and specified above are explained below in more specific terms.

According to example embodiments, testing of an MLModel can be requested and instantiated. Further, according to example embodiments, MLModels and MLApps can be tested.

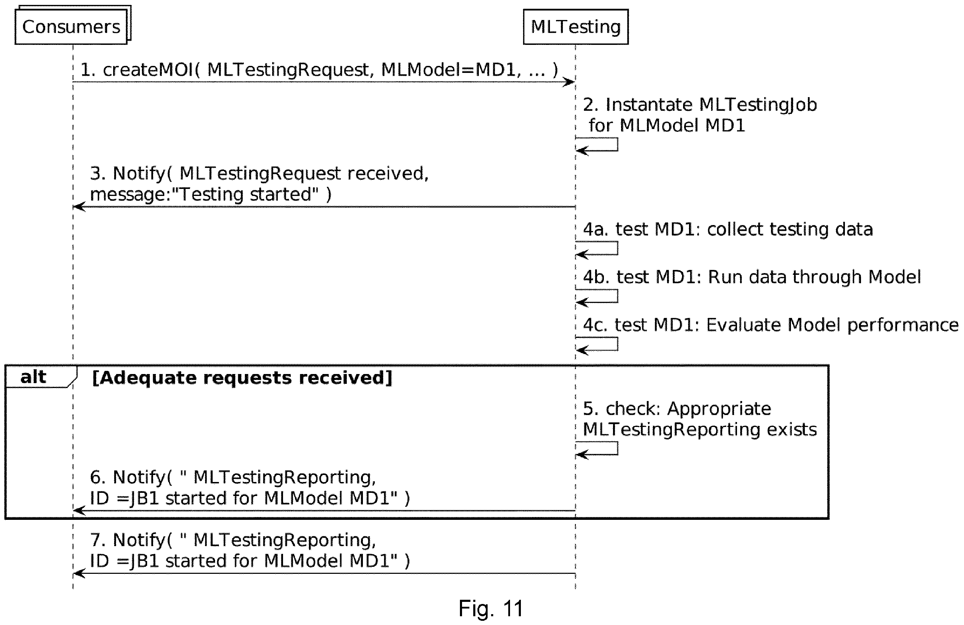

Figure 11 shows a schematic diagram of signaling sequences according to example embodiments, and in particular illustrates instantiating an MLTestingJob based on multiple requests from consumer functions, as well as subsequent processing.

According to example embodiments, the MLTesting has the capability to instantiate an MLTestingJob based on requests from consumers as illustrated in Figure 11.

As shown in step 1 of Figure 11, according to example embodiments, requests for testing from network functions may be received using MLTesting provisioning management service implemented via "create, read, update, delete" (CRUD) operations on the MLTestingRequest objects.

According to example embodiments, any request for testing states the following:
- MLModel: The identifier of the specific MLModel that the consumer wishes to be tested. The request may alternatively state the identifier of the MLApp that contains the MLModel which the consumer wishes to be tested, and
- expectedRuntimeContext: Represents the operating conditions and environment in which the model or its MLApp is expected to be deployed and for which the consumer whishes the testing to match.

According to example embodiments, further, each request may state the following:
- TerminationConditions: These define for the MLTesting the conditions to be used to terminate the testing, and
- MLTestingReportingFrequency: The frequency with which the consumer wishes to be informed about the progress of Testing.

As shown in step 2 of Figure 11, according to example embodiments, following a request, the MLTesting creates an instance of MLTestingRequest and may update that instance with status related to that request, e.g. that an associated MLTestingJob has been instantiated.

As shown in step 3 of Figure 11, according to example embodiments, MLTesting may also notify the consumer who initiated the request of the corresponding action taken regarding the request.

An MLTestingJob may be instantiated for each MLTestingRequest. For this reason, according to example embodiments, a consumer may also directly instantiate an MLTestingJob instead of instantiating an MLTestingRequest from which an MLTestingJob is later instantiated.

For a given MLTestingRequest, the MLTesting function instantiates and triggers an MLTestingJob as the process through the specific model shall be tested.

Heretofore, in relation to the testing, as shown in step 4a of Figure 11, according to example embodiments, the required data are identified and obtained either as specified in the MLTestingRequest or as identified by the meta data of the MLModel.

Furthermore, in relation to the testing, as shown in step 4b of Figure 11, according to example embodiments, this data is submitted to the MLModel or MLApp, and execution of the MLModel or MLApp is triggered to generate outcomes.

Furthermore, in relation to the testing, as shown in step 4c of Figure 11, according to example embodiments, the MLModel performance is derived by characterizing the outcomes and the extent to which they fulfil the expected outcomes of the MLModel.

Still further, in relation to the testing, according to example embodiments, the observed performance is compiled into testing reporting outcomes that shall be shared with the defined consumers.

Subsequent to instantiating the testing process (or latest after completing the testing), the MLTesting function may configure reporting for the corresponding MLTestingRequest.

If there exists an MLTestingReporting instance with the same characteristics as those stated in the MLTestingRequest (step 5 of Figure 11), the MLTesting function may append the new reporting requirements on to the existing MLTestingReporting instance.

Alternatively, the MLTesting function instantiates a new MLTestingReporting instance with the requirements as defined in the MLTestingRequest.

According to example embodiments, reporting on MLModel testing can be requested.

An MLTestingReporting is instantiated in one of the following ways:
- an MLTestingRequest is received with reporting requirements,
- an MLTestingJob is created with specific reporting requirements, and
- a request to create an MLTestingReporting instance is received.

Given requirements for reporting on MLTesting, e.g., as stated in an MLTestingRequest, the requirements may be mapped to an existing MLTestingReporting instance if the stated reporting requirements match the characteristics of the MLTestingReporting instance. Alternatively, a new MLTestingReporting instance may be created to match the stated reporting requirements.

According to example embodiments, reporting on MLModel testing can be performed.

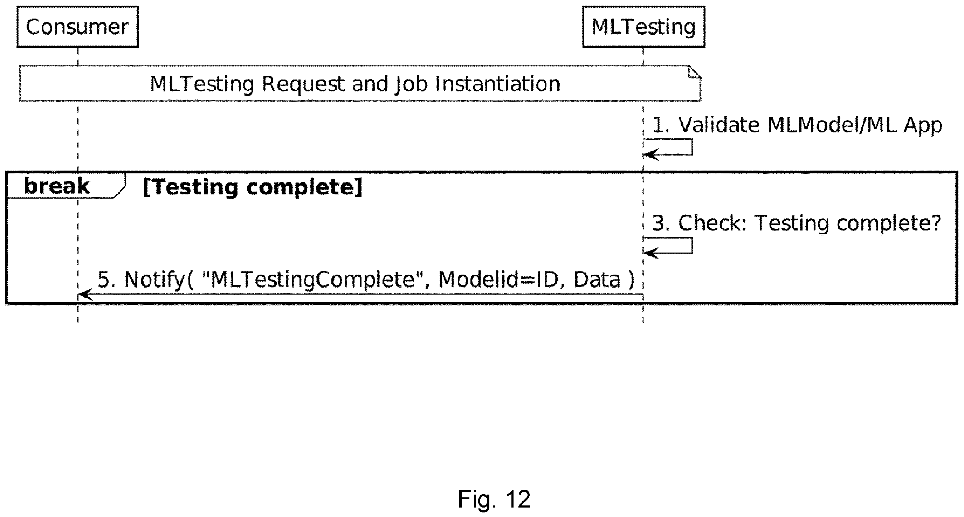

Figure 12 shows a schematic diagram of signaling sequences according to example embodiments, and in particular illustrates reporting the outcomes of one or more completed MLTestingJobs.

According to example embodiments, ML testing can be managed and controlled.

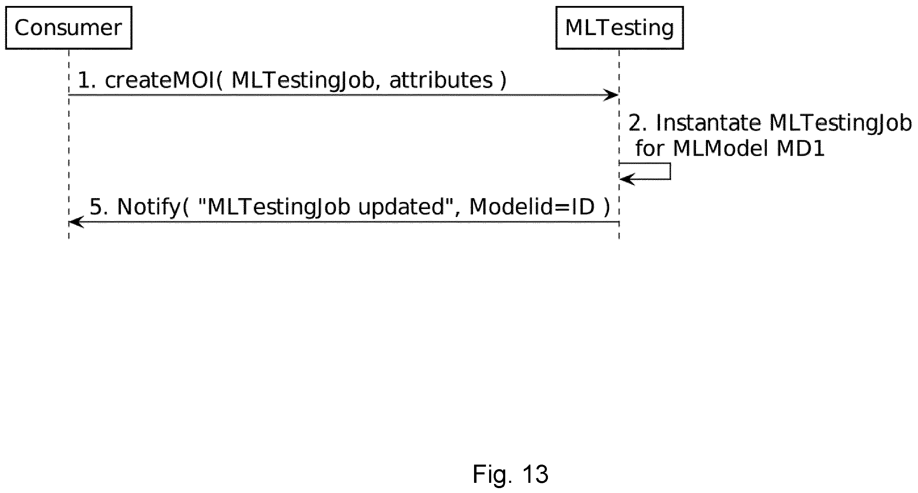

Figure 13 shows a schematic diagram of signaling sequences according to example embodiments, and in particular illustrates creating an MLTestingJob.

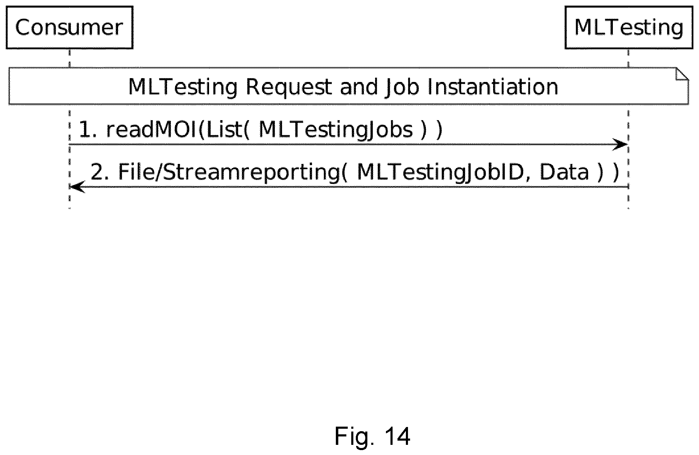

Figure 14 shows a schematic diagram of signaling sequences according to example embodiments, and in particular illustrates reading the characteristics of one or more ongoing or completed MLTestingJobs.

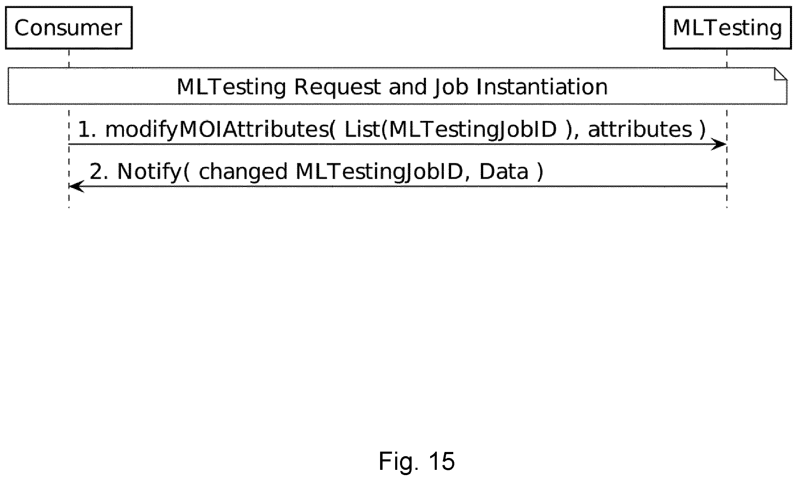

Figure 15 shows a schematic diagram of signaling sequences according to example embodiments, and in particular illustrates modifying the characteristics of one or more ongoing or completed MLTestingJobs.

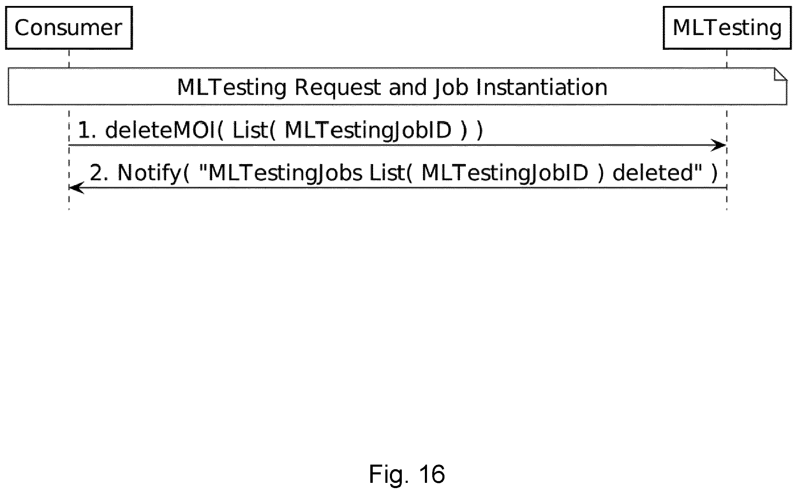

Figure 16 shows a schematic diagram of signaling sequences according to example embodiments, and in particular illustrates deleting one or more ongoing or completed MLTestingJobs.

The MLTesting has the capability and a control interface to allow a consumer (e.g., the operator) to configure and manage one or more MLTestingJobs. According to example embodiments, the control interface may, among others,
- enable the consumer to get the outcomes of the testing process; this may be achieved using the Notify procedure of the 3^{rd} Generation Partnership Project (3GPP) provisioning management service as illustrated by Figure 13,
- enable the consumer to read the characteristics of a testing job, e.g., may enable the consumer to read the status or completion level of the MLTestingJob or read the outcomes of the job; this may be achieved using the readMOI procedure of the 3GPP provisioning management service as illustrated by Figure 14,
- enable the consumer to configure new and ongoing MLTestingJobs, e.g., the operator may assign priorities to one or more MLTestingJobs to indicate that in case of resource constraints some particular MLTestingJobs with higher priority should be executed first; the configuration may be achieved using the updateMOI procedure of the 3GPP provisioning management service as illustrated by Figure 15 (following an update request, the MLTesting may notify the consumer about the success of the executed update on the MLTestingJob(s), and
- enable the consumer to delete unwanted jobs, be it ongoing or completed jobs; this may be achieved using the deleteMOI procedure of the 3GPP provisioning management service as illustrated by Figure 16 (following a delete request, the MLTesting may notify the consumer about the success of the executed deletion of MLTestingJobs.

According to example embodiments, MLTestingRequests can be managed and controlled.

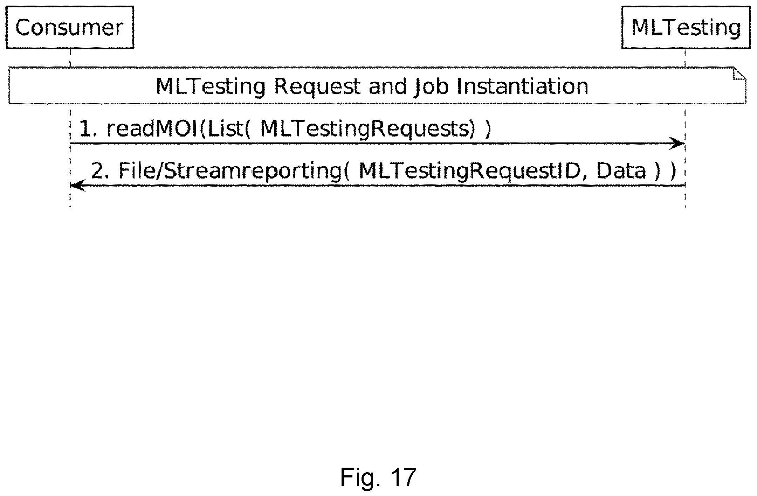

Figure 17 shows a schematic diagram of signaling sequences according to example embodiments, and in particular illustrates reading the characteristics of one or more ongoing or completed MLTestingJobs.

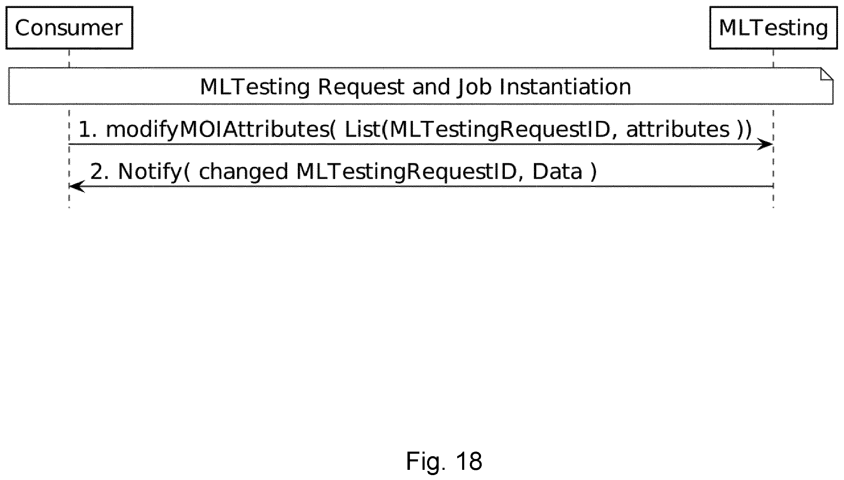

Figure 18 shows a schematic diagram of signaling sequences according to example embodiments, and in particular illustrates modifying the characteristics of one or more ongoing or completed MLTestingJobs.

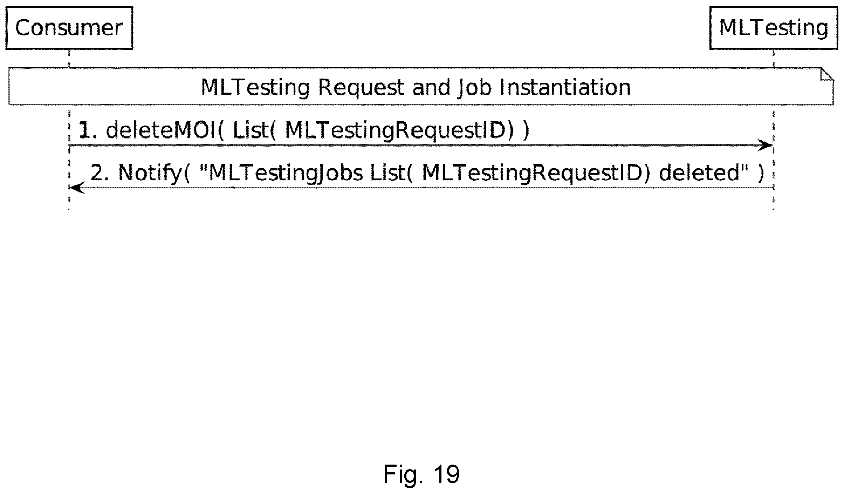

Figure 19 shows a schematic diagram of signaling sequences according to example embodiments, and in particular illustrates deleting one or more ongoing or completed MLTestingJobs.

The MLTesting has the capability and a control interface to allow a consumer (e.g., the operator) to configure and manage one or more MLTestingRequests. According to example embodiments, the control interface may, among others,
- enable the consumer to read the characteristics of submitted MLTestingRequests; this may be achieved using the readMOI procedure of the 3GPP provisioning management service as illustrated by Figure 17 (may, for example, enable the consumer to read the number of submitted, ongoing or completed MLTestingRequests, the features (e.g. priorities, expectedRuntimeContext, ...) of the different submitted or ongoing MLTestingRequests, and/or the status or completion levels of the different MLTestingRequests,
- enable the consumer to configure the submitted MLTestingRequests, e.g., the operator may change the priorities of one or more MLTestingRequests to indicate those that need to be prioritized regarding the instantiation of the related MLTestingJobs, and relatedly enable a consumer to update the priority of the MLTestingRequest sent a priori by that consumer; the configuration may be achieved using the updateMOI procedure of the 3GPP provisioning management service as illustrated by Figure 18 (following an update request, the MLTesting may notify the consumer about the success of the executed updates on the MLTestingRequests), and
- enable the consumer to delete unwanted MLTestingRequests; this may be achieved using the deleteMOI procedure of the 3GPP provisioning management service as illustrated by Figure 19 (following a delete request, the MLTesting may notify the consumer about the success of the executed deletion of MLTestingRequests).

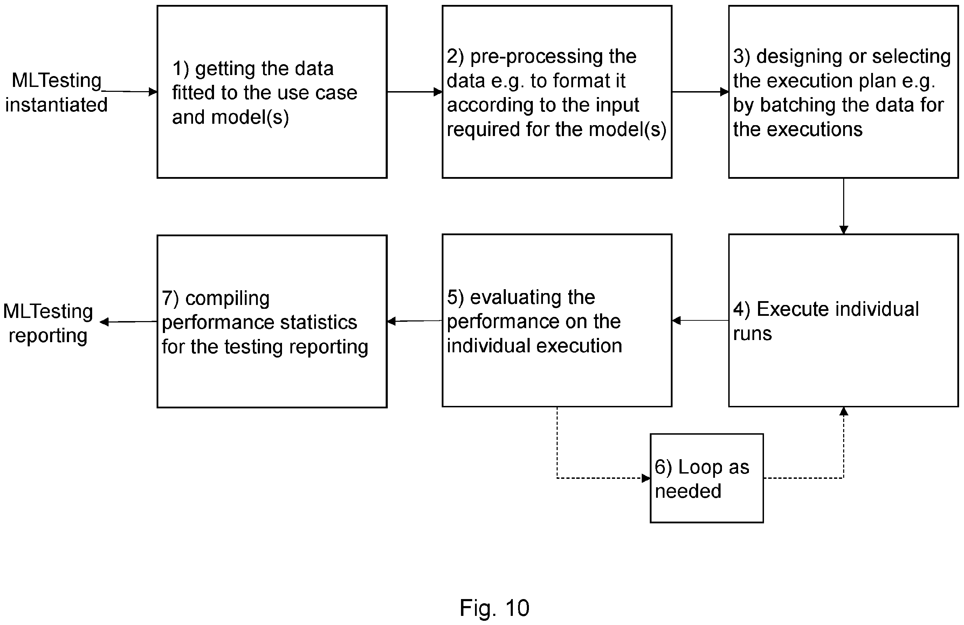

Figure 10 is a schematic diagram of a procedure according to example embodiments, and in particular illustrates in more detail sub-functions and processes of the MLTesting referred to above.

In other words, Figure 10 represents an MLTesting pipeline (end-to-end flow of action for MLTesting) according to example embodiments.

Given an instantiation of the MLTestingJob,
- as shown in step 1 of Figure 10, according to example embodiments, the MLTesting gets the data from the network that is fitted to the use case and MLModel(s)/MLApp(s) to be tested; thereby, the MLTesting may run local data collection jobs or may consume other data collection services,
- as shown in step 2 of Figure 10, according to example embodiments, the MLTesting executes data pre-processing algorithms e.g. to clean the data and remove unwanted features or errors and to format it according to the input required for the model(s),
- as shown in step 3 of Figure 10, according to example embodiments, the MLTesting designs or selects an execution plan, e.g., it decides the size and number of epochs to run for each model update,
- as shown in step 4 of Figure 10, according to example embodiments, the selected execution plan is then executed, collecting the according data, e.g. the losses observed for each epoch,
- as shown in step 5 of Figure 10, according to example embodiments, the MLTesting then evaluates the performance on the individual execution runs, following the according ML model updates,
- as shown in step 6 of Figure 10, according to example embodiments, depending on the designed execution plan, multiple loops involving steps 4 and 5 of Figure 10 may be executed, each culminating in a set of data related to the performance of the ML model, and
- as shown in step 7 of Figure 10, according to example embodiments, finally, with the designed execution runs executed, the MLTesting compiles the performance statistics for the testing which are then reported via the MLTesting reporting capabilities.

According to example embodiments, an information model is utilized for the above outlined, specified, and explained means, functions, and processes. The information model may be referred to as "MLTesting Information Model".

The MLTesting Information Model defines information object classes (IOC) and dataTypes utilized as one way to realize ML testing according to example embodiments, as well as the relationships among these IOCs and dataTypes.

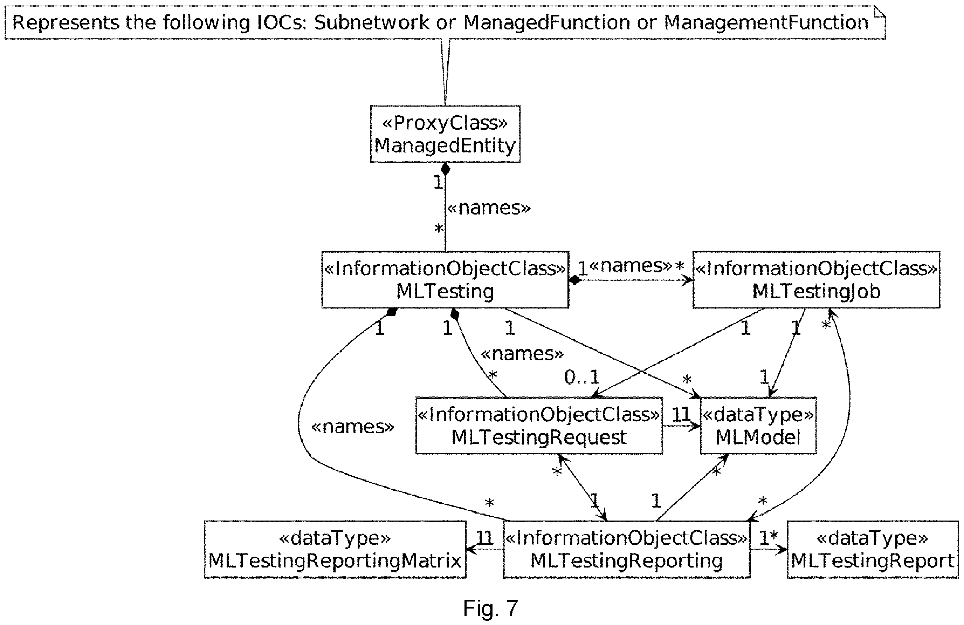

Figure 7 shows a schematic diagram illustrating relationships between units involved in ML model testing according to example embodiments, and in particular illustrates an information model for ML testing control.

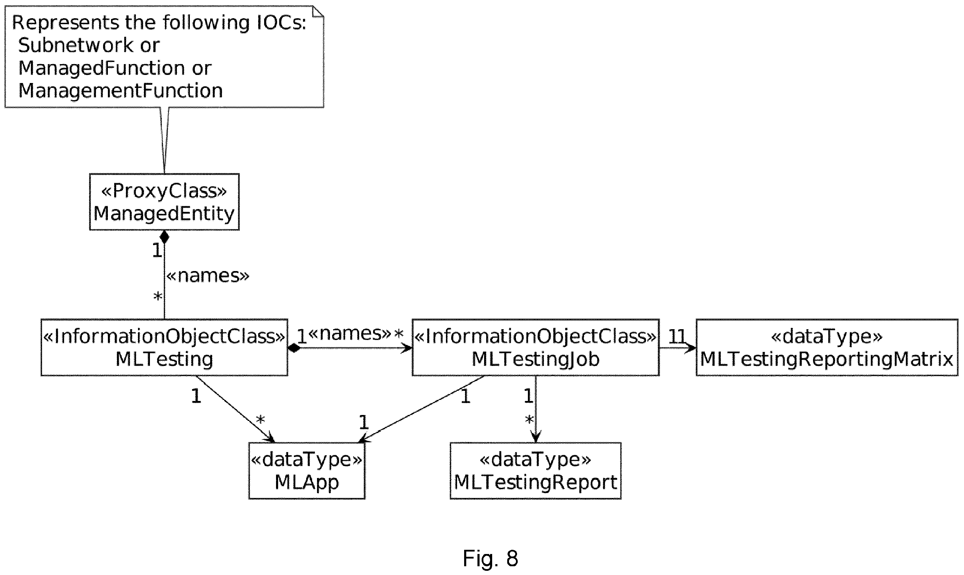

Figure 8 shows a schematic diagram illustrating relationships between units involved in ML model testing according to example embodiments, and in particular illustrates a simplified information model for ML testing control.

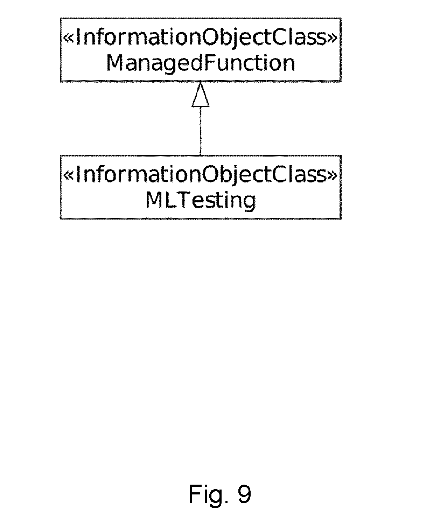

Figure 9 shows a schematic diagram illustrating relationships between units involved in ML model testing according to example embodiments, and in particular illustrates ML testing inheritance relations.

The MLTesting may be modelled as illustrated by Figures 7 to 9.

In case an MLTestingJob is directly instantiated by an authorized consumer, MLTestingRequest is not needed, and no IOC is modelled for it in that case. Subsequently, MLTestingReporting will be associated only with an MLTestingJob. Accordingly, the information model for ML testing control of Figure 7 may be simplified to the information model for ML testing control of Figure 8.

According to example embodiments, and in particular according to the information model utilized for the above outlined, specified, and explained means, functions, and processes according to example embodiments, class definitions (A), data type definitions (B), and attribute definitions (C) are provided as follows.

### A. Class definitions

### A.1 MLTesting <<IOC>>

### A.1.1 Definition

This IOC represents the properties of MLTesting.

MLTesting is a managed object instantiable from the MLTesting information object class and name-contained in either a Subnetwork, a ManagedFunction, or a ManagementFunction. The MLTesting is a type of managedFunction, i.e., the MLTesting is a subclass of and inherits the capabilities of a managedFunction

### A.1.2 Attributes

The MLTesting shall be associated with one or more MLModels.
- E.g., the MLModels associated with MLTesting may be associated via a list of MLModelIdentifers. The MLModelIdentifers specify the model and any specific version thereof.
- The MLTesting may contain one or more MLTestingRequests as well as one or more MLTestingJobs, where an MLTestingJob is instantiated following or in response to one received MLTestingRequests.
- MLTesting may be associated with MLTestingReporting. Moreover, MLTestingReporting is name-contained within MLTesting, since MLTesting may send the reports related to the testing.

Attributes included in/defined for the MLTesting IOC of the information model utilized for the above outlined, specified, and explained means, functions, and processes according to example embodiments are shown in the following table.

| **Attribute name** | **Support Qualifier** | **is Readable** | **is Writable** | **is Invariant** | **is Notifyable** |
|---|---|---|---|---|---|
| mIModelsList | CM | T | F | F | F |
| Attributes related to Role: | | | | | |
| MLTestingJobsRef | M | T | F | F | F |
| MLTestingRequest | M | T | T | F | T |
| MLTestingReporting | M | T | T | F | T |

### A.2 MLTestingJob <<IOC>>

### A.2.1 Definition

This IOC represents the properties of MLTestingJob.

For each MLModel under testing, an MLTestingJob is instantiated, i.e., the MLTestingJob is associated with exactly one MLModel. Moreover, the MLTestingJob is associated with one MLTestingRequest.
- MLTestingJob can be instantiated directly by an authorized consumer. Alternatively, MLTestingJob can be instantiated by MLTesting in response to an MLTestingRequest.
- The MLTestingJob needs to be managed separately from MLTestingRequest, e.g., the MLTestingJob may be instantiated directly without the existence of a related MLTestingRequest.
- Each MLTestingJob needs to be managed differently from the related MLModel, although the MLTestingJob may be associated to only one MLModel. The MLTestingJob may be triggered to test a MLModel that the MLTesting does not necessarily manage, i.e. the model may be managed by a different entity but the MLTestingJobs may still need to be associated with that model that it is validating.

- Each MLTestingJob may have a status attribute used to indicate the level of success of the MLTestingJob.
- The MLTestingJob may be associated with one or more instances of MLTestingReporting.
- The MLTestingJob may have a source to identify the entity which instantiated it and which may be used to prioritize among different MLTestingJobs from different sources. The sources may for example be an enumeration defined for network functions, operator roles, or other functional differentiations.
- Each MLTestingJob will have attributes specifying either the MLTestingData to be used to test the MLModel or MLApp(function) or an expectedRuntimeContext for which the MLModel or MLApp(function) should be tested.
- Each MLTestingJob will have attributes specifying the MLTestingReportingPeriod (e.g. periodically, after completion, etc.).
- The reporting requirements contained in the MLTestingJob must be mapped to an existing MLTestingReporting instance or create a new instance as needed.

### A.2.2 Attributes

Attributes included in/defined for the MLTestingJob IOC of the information model utilized for the above outlined, specified, and explained means, functions, and processes according to example embodiments are shown in the following table.

| **Attribute name** | **Support Qualifier** | **is Readable** | **is Writable** | **is Invariant** | **is Notifyable** |
|---|---|---|---|---|---|
| MLTestingJobID | M | T | F | F | F |
| mlModelID | M | T | F | F | F |
| MLTestingRequest | M | T | T | F | T |
| Source | M | T | T | F | T |
| MLTestingData | O | T | T | F | T |
| expectedRuntimeContext | O | T | T | F | T |
| ProgressStatus | M | T | T | F | T |
| MLTestingReporting | M | T | F | F | T |
| MLTestingReportingPeriod | O | T | T | F | T |

### A.3 MLTestingRequest <<IOC>>

### A.3.1 Definition

This IOC represents the properties of MLTestingRequest.

For each request to undertake testing, a consumer creates a new MLTestingRequest on the MLTesting, i.e., MLTestingRequest shall be an information object class that is instantiated for each request for testing.
- Each MLTestingRequest is associated to exactly one MLModel.
- Each MLTestingRequest may contain specific reporting requirements including an MLTestingReportingPeriod that define how the MLTesting may report about the MLTestingRequest or the associated MLTestingJob.
- The MLTestingRequest may be associated with an MLTestingJob that is instantiated in response to the MLTestingRequest.
- The MLTestingRequest may have a source to identify where it is coming from and which may be used to prioritize among different MLTestingRequests from different sources. The sources may for example be an enumeration defined for network functions, operator roles, or other functional differentiations.
- Each MLTestingRequest may have a RequestStatus field that is used to track the status of the specific MLTestingRequest or the associated MLTestingJob.
- Each MLTestingRequest will have attributes specifying either the MLTestingData to be used to test the MLModel or MLApp(function) or an expectedRuntimeContext for which the MLModel or MLApp(function) should be tested.
- The RequestStatus is written by the MLTesting when there is a change in status of the Testing progress. The RequestStatus is an enumeration with the following values:
   - "Pending": Indicates that the MLTestingRequest has been received but no action has been taken thereof. When other actions are taken regarding the MLTestingRequest, the RequestStatus changes to one of the following values.
   - "Triggered": When a corresponding MLTestingJob has been instantiated and is running.
   - "Suspended": The status when for one reason or another the MLTestingRequest has been suspended by the MLTesting or another authorized consumer, e.g. the operator.
   - "Served": The status when an MLTestingJob associated to the specific MLTestingRequest has run to completion.
- The reporting requirements contained in the MLTestingRequest must be mapped to an existing MLTestingReporting instance or create a new instance as needed.

### A.3.2 Attributes

Attributes included in/defined for the MLTestingRequest IOC of the information model utilized for the above outlined, specified, and explained means, functions, and processes according to example embodiments are shown in the following table.

| **Attribute name** | **Support Qualifier** | **is Readable** | **is Writable** | **is Invariant** | **is Notifyable** |
|---|---|---|---|---|---|
| MLTesting-RequestID | M | T | F | F | F |
| mIModel | M | T | F | F | F |
| MLTestingJob | M | T | F | F | F |
| Source | M | T | T | F | T |
| RequestStatus | M | T | T | F | T |
| MLTestingData | O | T | T | F | T |
| expectedRuntimeContext | O | T | T | F | T |
| MLTestingReportingPeriod | O | T | T | F | T |

### A.4 MLTestingReporting <<IOC>>

### A.4.1 Definition

This IOC represents the properties of MLTestingReporting.

The MLTestingReporting represents the capability of compiling and delivering reports and notifications about MLTesting or its associated MLTestingRequests, and MLTestingJobs. The MLTesting shall be associated with one or more instances of MLTestingReporting.

The MLTestingReporting may report on and as such shall be associated with one or more MLTestingRequests. Similarly, the MLTestingReporting may report on and as such shall be associated with one or more MLTestingJobs.
- Correspondingly, both the MLTestingRequests and the MLTestingJobs are conditionally mandatory in that at least one of them must be associated with an instance of MLTestingReporting.
- An instance of MLTestingReporting shall be created for each combination of reportable objects (MLTestingRequests and MLTestingJobs).
- Each MLTestingRequest is associated to an MLTestingReporting instance via the MLTestingJob to which the request is associated, and which then has an association to one MLTestingReporting instance.
- The MLTestingReporting should include an MLTestingReportingMatrix that defines the frequencies at which reports should be sent, the specific entities to which each report shall be sent at each time instant, and the objects which shall be included in each report.

The MLTestingReporting shall be associated with one or more MLTestingReports.

### A.4.2 Attributes

Attributes included in/defined for the MLTestingReporting IOC of the information model utilized for the above outlined, specified, and explained means, functions, and processes according to example embodiments are shown in the following table.

| **Attribute name** | **Support Qualifier** | **is Readable** | **is Writable** | **is Invariant** | **is Notifyable** |
|---|---|---|---|---|---|
| MLTesting-ReportingID | M | T | F | F | F |
| MLTestingRequests | CM | T | T | F | T |
| MLTestingJobs | CM | T | T | F | T |
| MLTestingReportingMatrix | M | T | F | F | F |
| MLTestingReports | O | T | F | F | F |

### B DataType definitions

### B.1 MLModel <<dataType>>

### B.1.1 Definition

This dataType represents the properties of an MLModel.

For each MLModel or MLApp(function) under testing, an MLTestingJob is instantiated. The MLTesting may instantiate an MLTestingJob for each MLTestingRequest. Alternatively, authorized consumers may directly instantiate MLTestingJobs to test specific MLModel or MLApp(function). The MLModel includes the attributes inherited from TOP IOC (e.g. defined in TS 28.622).

### B.2 MLTestingReportingMatrix <<dataType>>

### B.2.1 Definition

This dataType represents the properties of MLTestingReportingMatrix.

### B.3 MLTestingReport <<dataType>>

### B.3.1 Definition

This dataType represents the properties of MLTestingReport.
- MLTesting may generate one or more MLTestingReports.
- Each MLTestingReport is associated to one or more MLModels.
- All MLTestingReports must be associated with the MLTestingReporting instance.
- MLTestingReporting provides reports about MLModels or MLTestingJobs that themselves are associated with MLModels for which testing is requested and/or executed.

### B.3.2 Attributes

Attributes included in/defined for the MLTestingReport of the information model utilized for the above outlined, specified, and explained means, functions, and processes according to example embodiments are shown in the following table.

| **Attribute name** | **Support Qualifier** | **is Readable** | **is Writable** | **is Invariant** | **is Notifyable** |
|---|---|---|---|---|---|
| MLTestingReportID | M | T | F | F | F |
| MLTestingJobID | M | T | F | F | F |
| mIModelsList | M | T | F | F | F |
| MLTestingRequests | O | T | F | F | F |

### C. Attribute definitions

Attribute definitions provided for the information model utilized for the above outlined, specified, and explained means, functions, and processes according to example embodiments are shown in the following table.

| **Attribute Name** | **Documentation and Allowed Values** | **Properties** |
|---|---|---|
| mIModelsList | It indicates the list of ML models available at the MLTesting function | type: String |
| | | multiplicity: 1 |
| | | isOrdered: N/A |
| | | isUnique: N/A |
| | | defaultValue: None |
| | | isNullable: True |
| MLTestingJobID | It indicates an identifier for a specific instantiated MLTesting job | type: String |
| | | multiplicity: 1 |
| | | isOrdered: N/A |
| | | isUnique: N/A |
| | | defaultValue: None |
| | | isNullable: True |
| mIModelID | It indicates an identifier for a specific MLModel or MLApp. It may include the version identifiers of any such MLModel or MLApp | type: String |
| | | multiplicity: ^{∗} |
| | | isOrdered: False |
| | | isUnique: True |
| | | defaultValue: None |
| | | isNullable: True |
| Source | It indicates a managed object that initiates the request for MLTesting | type: String |
| | | multiplicity: 1 |
| | | isOrdered: N/A |
| | | isUnique: N/A |
| | | defaultValue: None |
| | | isNullable: True |
| MLTestingData | It indicates the data to be used for testing the model | type: Enum |
| | | multiplicity: 1 |
| | | isOrdered: N/A |
| | | isUnique: N/A |
| | | defaultValue: None |
| | | isNullable: True |
| expected Runtime Context | It describes the conditions and characteristics of the environment where the MLModel or MLApp is expected to be used for inference | type: String |
| | | multiplicity: ^{∗} |
| | | isOrdered: False |
| | | isUnique: True |
| | | defaultValue: None |
| | | isNullable: True |
| Prog ressStatus | It indicates the status of the MLTesting process as evaluated by the MLTesting function. | type: ENUM |
| | | multiplicity: ^{∗} |
| | | isOrdered: False |
| | | isUnique: True |
| | | defaultValue: None |
| | | isNullable: True |
| MLTestingReportingPeriod | It defines how the MLTesting may report about the MLTestingRequest or the associated MLTestingJob | type: INTEGER |
| | | multiplicity: 1 |
| | | isOrdered: N/A |
| | | isUnique: N/A |
| | | defaultValue: None |
| | | isNullable: True |
| MLTesting-ReportingID | It indicates an identifier for a specific MLTestingReporting instance | type: integer |
| | | multiplicity: 1 |
| | | isOrdered: N/A |
| | | isUnique: N/A |
| | | defaultValue: None |
| | | isNullable: False |
| MLTestingReportID | It indicates an identifier for a specific MLTesting report | type: integer |
| | | multiplicity: 1 |
| | | isOrdered: N/A |
| | | isUnique: N/A |
| | | defaultValue: None |
| | | isNullable: False |

In view of the above, advantageously, according to example embodiments, an authorized consumer is enabled to control and manage ML testing processes including after training testing and pre-deployment testing. This supports validating an MLModel / MLApp against a specified data set or given expected runtime context.

Moreover, advantageously, according to example embodiments, management functions are allowed to interact with ML testing functions to control the ML testing processes.

In the following, a concrete implementation according to example embodiments is described.

Even though AI/MLEntities are validated during development, it is necessary to test and check if a given AI/MLEntity or its capabilities are working correctly under specified runtime contexts or using certain testing data set.

### AI/ML Testing

After an ML model is trained, validation is done to ensure the training process is completed successfully. Typically, validation is done by preserving part of the training data set and using it after training to check whether the ML model has been trained correctly or not. However, even when validated during development, it is necessary to test and check if the AI/MLEntity or its capabilities are working correctly under certain runtime context or using certain testing data set. In principle, the validation and testing operations are similar on a functional level, where both of them check the ML performance against given context or data to ensure the correctness of the functionalities. But testing involves interaction with third parties (besides the developer of the AI/ML functionality), e.g. the operators that shall use the AI/ML functionality or third-party systems/functions that may rely on the results computed by the AI/ML functionality. For these reasons, provision of AI/ML testing and its control need to be standardized to enable the multi-vendor interaction among the different systems.

### Testing ML capability

Any AI/MLEntity needs to be tested with specific inputs and features that are applicable to the use case and the applicable deployment environment. The network or its management system needs to have the capabilities and provide the services needed to enable the consumer to request testing and receive feedback on the testing of a specific AI/MLEntity or of an application or function that contains an AI/MLEntity.

To achieve the desired outcomes, any AI/MLEntity needs to be tested with the appropriate network data, preferably within the network where the AI/MLEntity is expected to be deployed. Correspondingly, the network or its management system needs to have the required management services to test its AI/MLEntities.

### Control of ML Testing capability

Given a testing capability as provided by a given management function, an operator may wish to control and manage that testing capability. For example, the operator may wish to define policies on how frequent testing for a given AI/MLEntity may be executed. Correspondingly, the 3GPP management systems needs to provide the capability to allow the MLTesting to be configured.

In view of the above, a management system of the concrete implementation according to example embodiments has a capability for an authorized consumer to request the testing of a specific MLModel or AI/MLEntity(function).

Further, a management system of the concrete implementation according to example embodiments has a capability for an authorized consumer (e.g. the operator) to create an instance of the ML testing, (e.g. called the MLTestingJob).

Further, in a management system of the concrete implementation according to example embodiments, the provider of MLTesting has a capability to report to an authorized consumer the results of a specific instance of ML testing (e.g. called the MLTestingJob).

Further, a management system of the concrete implementation according to example embodiments has a capability for an authorized consumer (e.g. the operator) to configure or modify an instance of ML testing, e.g. to redefine its reporting characteristics.

Further, in a management system of the concrete implementation according to example embodiments, the provider of MLTesting has a capability to test a specific AI/MLEntity either by using any existing data, using specified data specified by the consumer, or using data with specific characteristics defined by the consumer.

Further, in a management system of the concrete implementation according to example embodiments, the provider of MLTesting has a capability to test a specific AI/MLEntity for a specified expected Runtime Context as may be stated by the consumer.

Further, in a management system of the concrete implementation according to example embodiments, the provider of MLTesting supports a capability for an authorized consumer to request reporting on a specific Request for MLTesting, on a specific instance of MLTesting or on the outcomes of any such Request or instance of MLTesting.

Further, in a management system of the concrete implementation according to example embodiments, the provider of MLTesting supports a capability for an authorized consumer (e.g. the function/entity that generated the Request for MLTesting) to define the reporting characteristics related to a specific instance of MLTesting.

Further, in a management system of the concrete implementation according to example embodiments, the provider of MLTesting supports a capability for an authorized consumer (e.g. an operator or the function/entity that generated the Request for MLTesting) to manage the request for MLTesting, e.g. to suspend, re-activate or cancel the Request for MLTesting; or to adjust the desired characteristics of the testing.

Further, in a management system of the concrete implementation according to example embodiments, a capability for an authorized consumer (e.g. an operator) to manage or control a specific instance of MLTesting, e.g. to start, suspend or restart the testing; or to adjust the testing conditions or characteristics, is to be provided.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network node or entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

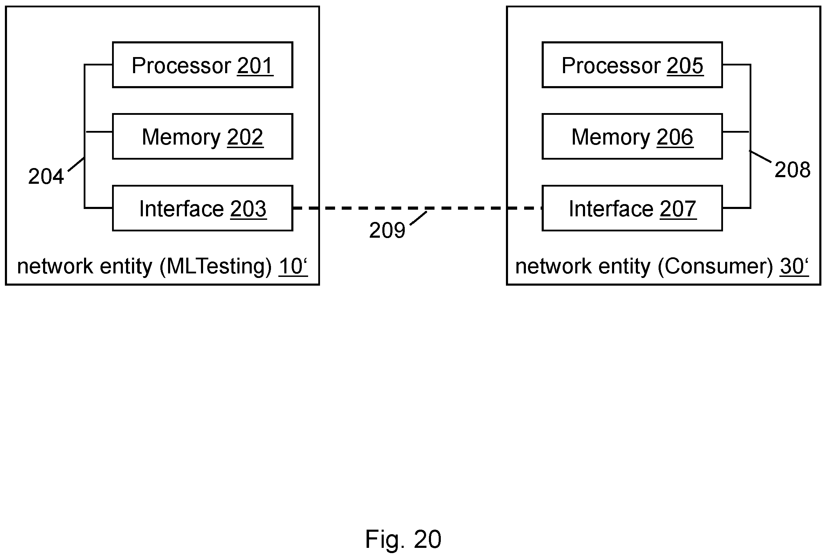

In Figure 20, an alternative illustration of apparatuses according to example embodiments is depicted. As indicated in Figure 20, according to example embodiments, the apparatus (network entity) 10' (corresponding to the network entity 10) comprises a processor 201, a memory 202 and an interface 203, which are connected by a bus 204 or the like. Further, according to example embodiments, the apparatus (network entity) 30' (corresponding to the network entity 30) comprises a processor 205, a memory 206 and an interface 207, which are connected by a bus 208 or the like, and the apparatuses may be connected via link 209, respectively.

The processor 201/205 and/or the interface 203/207 may also include a modem or the like to facilitate communication over a (hardwire or wireless) link, respectively. The interface 203/207 may include a suitable transceiver coupled to one or more antennas or communication means for (hardwire or wireless) communications with the linked or connected device(s), respectively. The interface 203/207 is generally configured to communicate with at least one other apparatus, i.e. the interface thereof.

The memory 202/206 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network entity 10 comprises at least one processor 201, at least one memory 202 including computer program code, and at least one interface 203 configured for communication with at least another apparatus. The processor (i.e. the at least one processor 201, with the at least one memory 202 and the computer program code) is configured to perform receiving information in relation to a machine learning model testing operation to be performed with respect to a machine learning model (thus the apparatus comprising corresponding means for receiving), to perform creating a machine learning model testing job representing said machine learning model testing operation (thus the apparatus comprising corresponding means for creating), and to perform transmitting information indicative of acknowledgement of said machine learning model testing operation (thus the apparatus comprising corresponding means for transmitting).

According to example embodiments, an apparatus representing the network entity 30 comprises at least one processor 205, at least one memory 206 including computer program code, and at least one interface 207 configured for communication with at least another apparatus. The processor (i.e. the at least one processor 205, with the at least one memory 206 and the computer program code) is configured to perform transmitting information in relation to a machine learning model testing operation to be performed with respect to a machine learning model (thus the apparatus comprising corresponding means for transmitting) and to perform receiving information indicative of acknowledgement of said machine learning model testing operation (thus the apparatus comprising corresponding means for receiving).

For further details regarding the operability/functionality of the individual apparatuses, reference is made to the above description in connection with any one of Figures 1 to 19, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for machine learning model testing. Such measures exemplarily comprise receiving information in relation to a machine learning model testing operation to be performed with respect to a machine learning model, creating a machine learning model testing job representing said machine learning model testing operation, and transmitting information indicative of acknowledgement of said machine learning model testing operation.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

Above example embodiments cover at least the following Items:
Item 1. A method comprising
   receiving information in relation to a machine learning model testing operation to be performed with respect to a machine learning model,
   creating a machine learning model testing job representing said machine learning model testing operation, and
   transmitting information indicative of acknowledgement of said machine learning model testing operation.
Item 2. The method according to Item 1, further comprising
   performing said machine learning model testing job.
Item 3. The method according to Item 2, wherein
   in relation to said performing, the method further comprises
   obtaining data fitted for testing said machine learning model, pre-processing said data,
   determining a plan for applying said machine learning model to said data,
   executing said plan, and
   compiling performance statistics based on results of said executing.
Item 4. The method according to Item 3, wherein
   in relation to said determining, the method further comprises
      designing said plan, or
      selecting said plan from a plurality of predetermined plans, and/or
   in relation to said executing, the method further comprises repeatedly applying said machine learning model to said data, evaluating a performance of said machine learning model, and updating said machine learning model based on said evaluating.
Item 5. The method according to any of Items 1 to 4, wherein
   said information in relation to said machine learning model testing operation to be performed is a request for testing said machine learning model.
Item 6. The method according to Item 5, wherein
   said request includes information on said machine learning model and information on expected machine learning model operation conditions.
Item 7. The method according to any of Items 1 to 4, wherein
   said information in relation to said machine learning model testing operation to be performed is a request for said machine learning model testing job.
Item 8. The method according to any of Items 1 to 7, further comprising
   generating testing reporting content based on performance of said machine learning model testing job, and
   transmitting said testing reporting content.
Item 9. The method according to any of Items 1 to 8, further comprising
   receiving information in relation to a required testing reporting.
Item 10. The method according to any of Items 1 to 9, further comprising
   receiving a request with respect to an existing machine learning model testing job.
Item 11. The method according to Item 10, wherein
   said request with respect to said existing machine learning model testing job is a demand for information on said existing machine learning model testing job, and the method further comprises
      investigating said information on said existing machine learning model testing job, and
      transmitting said information on said existing machine learning model testing job, or
   said request with respect to said existing machine learning model testing job is a demand for reconfiguration of said existing machine learning model testing job, and the method further comprises
      applying said reconfiguration to said existing machine learning model testing job, or
   said request with respect to said existing machine learning model testing job is a demand for deletion of said existing machine learning model testing job, and the method further comprises
      deleting said existing machine learning model testing job.
Item 12. The method according to any of Items 1 to 11, further comprising
   receiving a request with respect to an existing machine learning model testing request.
Item 13. The method according to Item 12, wherein
   said request with respect to said existing machine learning model testing request is a demand for information on said existing machine learning model testing request, and the method further comprises
      investigating said information on said existing machine learning model testing request, and
      transmitting said information on said existing machine learning model testing request, or
   said request with respect to said existing machine learning model testing request is a demand for configuration of said existing machine learning model testing request, and the method further comprises
      applying said configuration to said existing machine learning model testing request, or
   said request with respect to said existing machine learning model testing request is a demand for deletion of said existing machine learning model testing request, and the method further comprises
      deleting said existing machine learning model testing request.
Item 14. A method comprising
   transmitting information in relation to a machine learning model testing operation to be performed with respect to a machine learning model, and
   receiving information indicative of acknowledgement of said machine learning model testing operation.
Item 15. The method according to Item 14, wherein
   said information in relation to said machine learning model testing operation to be performed is a request for testing said machine learning model.
Item 16. The method according to Item 15, wherein
   said request includes information on said machine learning model and information on expected machine learning model operation conditions.
Item 17. The method according to Item 14, wherein
   said information in relation to said machine learning model testing operation to be performed is a request for a machine learning model testing job.
Item 18. The method according to any of Items 14 to 17, further comprising
   receiving testing reporting content.
Item 19. The method according to any of Items 14 to 18, further comprising
   transmitting information in relation to a required testing reporting.
Item 20. The method according to any of Items 14 to 19, further comprising
   transmitting a request with respect to an existing machine learning model testing job.
Item 21. The method according to Item 20, wherein
   said request with respect to said existing machine learning model testing job is a demand for information on said existing machine learning model testing job, and the method further comprises
      receiving said information on said existing machine learning model testing job, or
   said request with respect to said existing machine learning model testing job is a demand for reconfiguration of said existing machine learning model testing job, or
   said request with respect to said existing machine learning model testing job is a demand for deletion of said existing machine learning model testing job.
Item 22. The method according to any of Items 14 to 21, further comprising
   transmitting a request with respect to an existing machine learning model testing request.
Item 23. The method according to Item 22, wherein
   said request with respect to said existing machine learning model testing request is a demand for information on said existing machine learning model testing request, and the method further comprises
      receiving said information on said existing machine learning model testing request, or
   said request with respect to said existing machine learning model testing request is a demand for configuration of said existing machine learning model testing request, or
   said request with respect to said existing machine learning model testing request is a demand for deletion of said existing machine learning model testing request.
Item 24. An apparatus comprising
   receiving circuitry configured to receive information in relation to a machine learning model testing operation to be performed with respect to a machine learning model,
   creating circuitry configured to create a machine learning model testing job representing said machine learning model testing operation, and
   transmitting circuitry configured to transmit information indicative of acknowledgement of said machine learning model testing operation.
Item 25. The apparatus according to Item 24, further comprising
   performing circuitry configured to perform said machine learning model testing job.
Item 26. The apparatus according to Item 25, further comprising
   obtaining circuitry configured to obtain data fitted for testing said machine learning model,
   pre-processing circuitry configured to pre-process said data,
   determining circuitry configured to determine a plan for applying said machine learning model to said data,
   executing circuitry configured to execute said plan, and
   compiling circuitry configured to compile performance statistics based on results of said executing.
Item 27. The apparatus according to Item 26, further comprising
   designing circuitry configured to design said plan, or
   selecting circuitry configured to select said plan from a plurality of predetermined plans, and/or
   repeating circuitry configured to repeatedly
   apply said machine learning model to said data,
   evaluate a performance of said machine learning model, and
   update said machine learning model based on said evaluating.
Item 28. The apparatus according to any of Items 24 to 27, wherein
   said information in relation to said machine learning model testing operation to be performed is a request for testing said machine learning model.
Item 29. The apparatus according to Item 28, wherein
   said request includes information on said machine learning model and information on expected machine learning model operation conditions.
Item 30. The apparatus according to any of Items 24 to 27, wherein
   said information in relation to said machine learning model testing operation to be performed is a request for said machine learning model testing job.
Item 31. The apparatus according to any of Items 24 to 30, further comprising
   generating circuitry configured to generate testing reporting content based on performance of said machine learning model testing job, and
   transmitting circuitry configured to transmit said testing reporting content.
Item 32. The apparatus according to any of Items 24 to 31, further comprising
   receiving circuitry configured to receive information in relation to a required testing reporting.
Item 33. The apparatus according to any of Items 24 to 32, further comprising
   receiving circuitry configured to receive a request with respect to an existing machine learning model testing job.
Item 34. The apparatus according to Item 33, wherein
   said request with respect to said existing machine learning model testing job is a demand for information on said existing machine learning model testing job, and the apparatus further comprises
      investigating circuitry configured to investigate said information on said existing machine learning model testing job, and
      transmitting circuitry configured to transmit said information on said existing machine learning model testing job, or
   said request with respect to said existing machine learning model testing job is a demand for reconfiguration of said existing machine learning model testing job, and the apparatus further comprises
      applying circuitry configured to apply said reconfiguration to said existing machine learning model testing job, or
   said request with respect to said existing machine learning model testing job is a demand for deletion of said existing machine learning model testing job, and the apparatus further comprises
      deleting circuitry configured to delete said existing machine learning model testing job.
Item 35. The apparatus according to any of Items 24 to 34, further comprising
   receiving circuitry configured to receive a request with respect to an existing machine learning model testing request.
Item 36. The apparatus according to Item 35, wherein
   said request with respect to said existing machine learning model testing request is a demand for information on said existing machine learning model testing request, and the apparatus further comprises
      investigating circuitry configured to investigate said information on said existing machine learning model testing request, and
      transmitting circuitry configured to transmit said information on said existing machine learning model testing request, or
   said request with respect to said existing machine learning model testing request is a demand for configuration of said existing machine learning model testing request, and the apparatus further comprises
      applying circuitry configured to apply said configuration to said existing machine learning model testing request, or
   said request with respect to said existing machine learning model testing request is a demand for deletion of said existing machine learning model testing request, and the apparatus further comprises
      deleting circuitry configured to delete said existing machine learning model testing request.
Item 37. An apparatus comprising
   transmitting circuitry configured to transmit information in relation to a machine learning model testing operation to be performed with respect to a machine learning model, and
   receiving circuitry configured to receive information indicative of acknowledgement of said machine learning model testing operation.
Item 38. The apparatus according to Item 37, wherein
   said information in relation to said machine learning model testing operation to be performed is a request for testing said machine learning model.
Item 39. The apparatus according to Item 38, wherein
   said request includes information on said machine learning model and information on expected machine learning model operation conditions.
Item 40. The apparatus according to Item 37, wherein
   said information in relation to said machine learning model testing operation to be performed is a request for a machine learning model testing job.
Item 41. The apparatus according to any of Items 37 to 40, further comprising
   receiving circuitry configured to receive testing reporting content.
Item 42. The apparatus according to any of Items 37 to 41, further comprising
   transmitting circuitry configured to transmit information in relation to a required testing reporting.
Item 43. The apparatus according to any of Items 37 to 42, further comprising
   transmitting circuitry configured to transmit a request with respect to an existing machine learning model testing job.
Item 44. The apparatus according to Item 43, wherein
   said request with respect to said existing machine learning model testing job is a demand for information on said existing machine learning model testing job, and the apparatus further comprises
      receiving circuitry configured to receive said information on said existing machine learning model testing job, or
   said request with respect to said existing machine learning model testing job is a demand for reconfiguration of said existing machine learning model testing job, or
   said request with respect to said existing machine learning model testing job is a demand for deletion of said existing machine learning model testing job.
Item 45. The apparatus according to any of Items 37 to 44, further comprising
   transmitting circuitry configured to transmit a request with respect to an existing machine learning model testing request.
Item 46. The apparatus according to Item 45, wherein
   said request with respect to said existing machine learning model testing request is a demand for information on said existing machine learning model testing request, and the apparatus further comprises
      receiving circuitry configured to receive said information on said existing machine learning model testing request, or
   said request with respect to said existing machine learning model testing request is a demand for configuration of said existing machine learning model testing request, or
   said request with respect to said existing machine learning model testing request is a demand for deletion of said existing machine learning model testing request.
Item 47. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving information in relation to a machine learning model testing operation to be performed with respect to a machine learning model,
      creating a machine learning model testing job representing said machine learning model testing operation, and
      transmitting information indicative of acknowledgement of said machine learning model testing operation.
Item 48. The apparatus according to Item 47, wherein
   the at least one processor, with the at least one memory and the computer program code, being configured to cause the apparatus to perform:
   performing said machine learning model testing job.
Item 49. The apparatus according to Item 48, wherein
   in relation to said performing, the at least one processor, with the at least one memory and the computer program code, being configured to cause the apparatus to perform:
   obtaining data fitted for testing said machine learning model,
   pre-processing said data,
   determining a plan for applying said machine learning model to said data,
   executing said plan, and
   compiling performance statistics based on results of said executing.
Item 50. The apparatus according to Item 49, wherein
   in relation to said determining, the at least one processor, with the at least one memory and the computer program code, being configured to cause the apparatus to perform:
      designing said plan, or
      selecting said plan from a plurality of predetermined plans, and/or
   in relation to said executing, the at least one processor, with the at least one memory and the computer program code, being configured to cause the apparatus to perform repeatedly:
      applying said machine learning model to said data,
      evaluating a performance of said machine learning model, and
      updating said machine learning model based on said evaluating.
Item 51. The apparatus according to any of Items 47 to 50, wherein
   said information in relation to said machine learning model testing operation to be performed is a request for testing said machine learning model.
Item 52. The apparatus according to Item 51, wherein
   said request includes information on said machine learning model and information on expected machine learning model operation conditions.
Item 53. The apparatus according to any of Items 47 to 50, wherein
   said information in relation to said machine learning model testing operation to be performed is a request for said machine learning model testing job.
Item 54. The apparatus according to any of Items 47 to 53, wherein
   the at least one processor, with the at least one memory and the computer program code, being configured to cause the apparatus to perform:
   generating testing reporting content based on performance of said machine learning model testing job, and
   transmitting said testing reporting content.
Item 55. The apparatus according to any of Items 47 to 54, wherein
   the at least one processor, with the at least one memory and the computer program code, being configured to cause the apparatus to perform:
   receiving information in relation to a required testing reporting.
Item 56. The apparatus according to any of Items 47 to 55, wherein
   the at least one processor, with the at least one memory and the computer program code, being configured to cause the apparatus to perform:
   receiving a request with respect to an existing machine learning model testing job.
Item 57. The apparatus according to Item 56, wherein
   said request with respect to said existing machine learning model testing job is a demand for information on said existing machine learning model testing job, and the at least one processor, with the at least one memory and the computer program code, being configured to cause the apparatus to perform:
      investigating said information on said existing machine learning model testing job, and
      transmitting said information on said existing machine learning model testing job, or
   said request with respect to said existing machine learning model testing job is a demand for reconfiguration of said existing machine learning model testing job, and the at least one processor, with the at least one memory and the computer program code, being configured to cause the apparatus to perform:
      applying said reconfiguration to said existing machine learning model testing job, or
   said request with respect to said existing machine learning model testing job is a demand for deletion of said existing machine learning model testing job, and the at least one processor, with the at least one memory and the computer program code, being configured to cause the apparatus to perform:
      deleting said existing machine learning model testing job.
Item 58. The apparatus according to any of Items 47 to 57, wherein
   the at least one processor, with the at least one memory and the computer program code, being configured to cause the apparatus to perform:
   receiving a request with respect to an existing machine learning model testing request.
Item 59. The apparatus according to Item 58, wherein
   said request with respect to said existing machine learning model testing request is a demand for information on said existing machine learning model testing request, and the at least one processor, with the at least one memory and the computer program code, being configured to cause the apparatus to perform:
      investigating said information on said existing machine learning model testing request, and
      transmitting said information on said existing machine learning model testing request, or
   said request with respect to said existing machine learning model testing request is a demand for configuration of said existing machine learning model testing request, and the at least one processor, with the at least one memory and the computer program code, being configured to cause the apparatus to perform:
      applying said configuration to said existing machine learning model testing request, or
   said request with respect to said existing machine learning model testing request is a demand for deletion of said existing machine learning model testing request, and the at least one processor, with the at least one memory and the computer program code, being configured to cause the apparatus to perform:
      deleting said existing machine learning model testing request.
Item 60. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      transmitting information in relation to a machine learning model testing operation to be performed with respect to a machine learning model, and
      receiving information indicative of acknowledgement of said machine learning model testing operation.
Item 61. The apparatus according to Item 60, wherein
   said information in relation to said machine learning model testing operation to be performed is a request for testing said machine learning model.
Item 62. The apparatus according to Item 61, wherein
   said request includes information on said machine learning model and information on expected machine learning model operation conditions.
Item 63. The apparatus according to Item 60, wherein
   said information in relation to said machine learning model testing operation to be performed is a request for a machine learning model testing job.
Item 64. The apparatus according to any of Items 60 to 63, wherein
   the at least one processor, with the at least one memory and the computer program code, being configured to cause the apparatus to perform:
   receiving testing reporting content.
Item 65. The apparatus according to any of Items 60 to 64, wherein
   the at least one processor, with the at least one memory and the computer program code, being configured to cause the apparatus to perform:
   transmitting information in relation to a required testing reporting.
Item 66. The apparatus according to any of Items 60 to 65, wherein
   the at least one processor, with the at least one memory and the computer program code, being configured to cause the apparatus to perform:
   transmitting a request with respect to an existing machine learning model testing job.
Item 67. The apparatus according to Item 66, wherein
   said request with respect to said existing machine learning model testing job is a demand for information on said existing machine learning model testing job, and the at least one processor, with the at least one memory and the computer program code, being configured to cause the apparatus to perform:
      receiving said information on said existing machine learning model testing job, or
   said request with respect to said existing machine learning model testing job is a demand for reconfiguration of said existing machine learning model testing job, or
   said request with respect to said existing machine learning model testing job is a demand for deletion of said existing machine learning model testing job.
Item 68. The apparatus according to any of Items 60 to 67, wherein
   the at least one processor, with the at least one memory and the computer program code, being configured to cause the apparatus to perform:
   transmitting a request with respect to an existing machine learning model testing request.
Item 69. The apparatus according to Item 68, wherein
   said request with respect to said existing machine learning model testing request is a demand for information on said existing machine learning model testing request, and the at least one processor, with the at least one memory and the computer program code, being configured to cause the apparatus to perform:
      receiving said information on said existing machine learning model testing request, or
   said request with respect to said existing machine learning model testing request is a demand for configuration of said existing machine learning model testing request, or
   said request with respect to said existing machine learning model testing request is a demand for deletion of said existing machine learning model testing request.
Item 70. A computer program product comprising computer-executable computer program code which, when the program is run on a computer, is configured to cause the computer to carry out the method according to any one of Items 1 to 13 or 14 to 23.
Item 71. The computer program product according to Item 70, wherein the computer program product comprises a computer-readable medium on which the computer-executable computer program code is stored, and/or wherein the program is directly loadable into an internal memory of the computer or a processor thereof.

### List of acronyms and abbreviations

- 3GPP: 3rd Generation Partnership Project
- AI: artificial intelligence
- CAN: cognitive autonomous network
- CF: cognitive function
- CRUD: create, read, update, delete
- IOC: information object class
- ML: machine learning
- OAM: operations, administration and management

## Claims

1. An apparatus comprising
receiving circuitry configured to receive information in relation to a machine learning model testing operation to be performed with respect to a machine learning model,
creating circuitry configured to create a machine learning model testing job representing said machine learning model testing operation, and
transmitting circuitry configured to transmit information indicative of acknowledgement of said machine learning model testing operation.

2. The apparatus according to claim 1, further comprising
performing circuitry configured to perform said machine learning model testing job. wherein optionally
the apparatus further comprises
obtaining circuitry configured to obtain data fitted for testing said machine learning model,
pre-processing circuitry configured to pre-process said data,
determining circuitry configured to determine a plan for applying said machine learning model to said data,
executing circuitry configured to execute said plan,
compiling circuitry configured to compile performance statistics based on results of said executing.

3. The apparatus according to claim 1 or 2, wherein
said information in relation to said machine learning model testing operation to be performed is a request for testing said machine learning model, wherein optionally
said request includes information on said machine learning model and information on expected machine learning model operation conditions.

4. The apparatus according to claim 1 or 2, wherein
said information in relation to said machine learning model testing operation to be performed is a request for said machine learning model testing job.

5. The apparatus according to any of claims 1 to 4, wherein
the apparatus further comprises
generating circuitry configured to generate testing reporting content based on performance of said machine learning model testing job, and
transmitting circuitry configured to transmit said testing reporting content, and/or wherein
the apparatus further comprises
receiving circuitry configured to receive information in relation to a required testing reporting.

6. The apparatus according to any of claims 1 to 5, further comprising
receiving circuitry configured to receive a request with respect to an existing machine learning model testing job, and optionally
wherein
said request with respect to said existing machine learning model testing job is a demand for information on said existing machine learning model testing job, and the apparatus further comprises
investigating circuitry configured to investigate said information on said existing machine learning model testing job, and
transmitting circuitry configured to transmit said information on said existing machine learning model testing job, or
said request with respect to said existing machine learning model testing job is a demand for reconfiguration of said existing machine learning model testing job, and the apparatus further comprises
applying circuitry configured to apply said reconfiguration to said existing machine learning model testing job, or
said request with respect to said existing machine learning model testing job is a demand for deletion of said existing machine learning model testing job, and the apparatus further comprises
deleting circuitry configured to delete said existing machine learning model testing job.

7. The apparatus according to any of claims 1 to 6, further comprising
receiving circuitry configured to receive a request with respect to an existing machine learning model testing request, and optionally
wherein
said request with respect to said existing machine learning model testing request is a demand for information on said existing machine learning model testing request, and the apparatus further comprises
investigating circuitry configured to investigate said information on said existing machine learning model testing request, and
transmitting circuitry configured to transmit said information on said existing machine learning model testing request, or
said request with respect to said existing machine learning model testing request is a demand for configuration of said existing machine learning model testing request, and the apparatus further comprises
applying circuitry configured to apply said configuration to said existing machine learning model testing request, or
said request with respect to said existing machine learning model testing request is a demand for deletion of said existing machine learning model testing request, and the apparatus further comprises
deleting circuitry configured to delete said existing machine learning model testing request.

8. An apparatus comprising
transmitting circuitry configured to transmit information in relation to a machine learning model testing operation to be performed with respect to a machine learning model, and
receiving circuitry configured to receive information indicative of acknowledgement of said machine learning model testing operation.

9. The apparatus according to claim 8, wherein
said information in relation to said machine learning model testing operation to be performed is a request for testing said machine learning model, wherein optionally
said request includes information on said machine learning model and information on expected machine learning model operation conditions.

10. The apparatus according to claim 8, wherein
said information in relation to said machine learning model testing operation to be performed is a request for a machine learning model testing job.

11. The apparatus according to any of claims 8 to 10, further comprising
receiving circuitry configured to receive testing reporting content, and/or
transmitting circuitry configured to transmit information in relation to a required testing reporting.

12. The apparatus according to any of claims 8 to 11, further comprising
transmitting circuitry configured to transmit a request with respect to an existing machine learning model testing job, and optionally
wherein
said request with respect to said existing machine learning model testing job is a demand for information on said existing machine learning model testing job, and the apparatus further comprises
receiving circuitry configured to receive said information on said existing machine learning model testing job, or
said request with respect to said existing machine learning model testing job is a demand for reconfiguration of said existing machine learning model testing job, or
said request with respect to said existing machine learning model testing job is a demand for deletion of said existing machine learning model testing job.

13. The apparatus according to any of claims 8 to 12, further comprising
transmitting circuitry configured to transmit a request with respect to an existing machine learning model testing request, and optionally
wherein
said request with respect to said existing machine learning model testing request is a demand for information on said existing machine learning model testing request, and the apparatus further comprises
receiving circuitry configured to receive said information on said existing machine learning model testing request, or
said request with respect to said existing machine learning model testing request is a demand for configuration of said existing machine learning model testing request, or
said request with respect to said existing machine learning model testing request is a demand for deletion of said existing machine learning model testing request.

14. A method comprising
receiving information in relation to a machine learning model testing operation to be performed with respect to a machine learning model,
creating a machine learning model testing job representing said machine learning model testing operation, and
transmitting information indicative of acknowledgement of said machine learning model testing operation.

15. A method comprising
transmitting information in relation to a machine learning model testing operation to be performed with respect to a machine learning model, and
receiving information indicative of acknowledgement of said machine learning model testing operation.

16. A computer program product comprising computer-executable computer program code which, when the program is run on a computer, is configured to cause the computer to carry out the method according to any one of claims 14 or 15, wherein optionally
the computer program product comprises a computer-readable medium on which the computer-executable computer program code is stored, and/or wherein the program is directly loadable into an internal memory of the computer or a processor thereof.
